**Europäisches Patentamt**

**European Patent Office**

**Office européen des brevets**

(11) Publication number: **0 164 561**
**B1**

(12)

# EUROPEAN PATENT SPECIFICATION

(45) Date of publication of patent specification: **08.08.90**

(51) Int. Cl.⁵: **F 15 B 21/08**

(21) Application number: **85105467.6**

(22) Date of filing: **04.05.85**

(54) **Flow control valve.**

(30) Priority: **14.06.84 JP 122588/84**

(43) Date of publication of application:
**18.12.85 Bulletin 85/51**

(45) Publication of the grant of the patent:
**08.08.90 Bulletin 90/32**

(84) Designated Contracting States:
**CH DE FR GB IT LI SE**

(56) References cited:
**FR-A-1 470 343**
**GB-A- 869 105**
**GB-A-1 083 944**
**US-A-2 800 885**
**US-A-4 161 264**
**US-A-4 281 584**

(73) Proprietor: **Aida Engineering Ltd.**
**2-10, Oyama-cho**
**Sagamihara-shi, Kanagawa-ken (JP)**

(72) Inventor: **Uehara, Tadayoshi**
**3-7-7 Yokoyama**
**Sagamihara-City Kanagawa-Pref (JP)**

(74) Representative: **Sobisch, Peter, Dipl.-Ing. et al**
**Patentanwälte Dipl.-Inge. Röse, Kosel & Sobisch**
**Odastrasse 4a Postfach 129**
**D-3353 Bad Gandersheim 1 (DE)**

Courier Press, Leamington Spa, England.

## Description

The present invention relates to a flow control valve, designed to control the flux of a fluid in response to the number of pulses, produced by a pulse signal means.

Flow control valves designed to control the flux of a fluid in response to an electric signal have heretofore been known, however, such conventional types of flow control valves were generally constructed thus that initially a sawtooth-wave-form pulse signal and a variable reference level pulse signal are both sent to a comparator circuit and than the valve is opened when the level of said saw-tooth-wave-form pulse signal is larger than that of the reference level pulse signal. That is, these types of flow control valves are generally to control the flux of fluid by a so-called pulse width modulation system.

Consequently, in such conventional flow control valves, an electric circuit was especially sophisticated, while their responsive performances and controllable accuracies were not always satisfiable for users from the reason of structural limitation of the valve body to be used.

The document US—A—4 281 584 reveals a control valve substantially corresponding to the features of the preamble of the claim 1. This valve is designed as a magnetically operated bistable-controlled ball valve whose throughput quantity might be adapted by pulse modulation.

The underlying problem of the present invention is to provide a flow new control valve enabling an exact control of the flux of a fluid in response to a pulse frequency. Within a flow control valve according to the preamble of claim 1 this problem is solved by the features of the characterising portion of claim 1.

The flux flowing from the "IN"-port to the "OUT"-port can thereby be controlled exactly by controlling the frequency of the pulse signal.

In the following the invention will be described in more details with reference to the accompanying drawings.

Fig. 1 is a structural diagram of the mechanism showing an embodiment of the present invention.

Fig. 2 is an operational timing chart of the embodiment shown in Fig. 1.

In these drawings, each numeric number denotes;

Valve Body: 1
IN-port. 2.
OUT-port. 3
Fluid flow passages: 4a, 4b
Poppets: 5a, 5b
Poppets: 6a, 6b
Pressure chambers: 8a, 8b
Pressure chambers: 11a, 11b
Valve seats: 9a, 9b
Valve seats: 12a, 12b
Pulse oscillator 13
Orifices: 14, 15

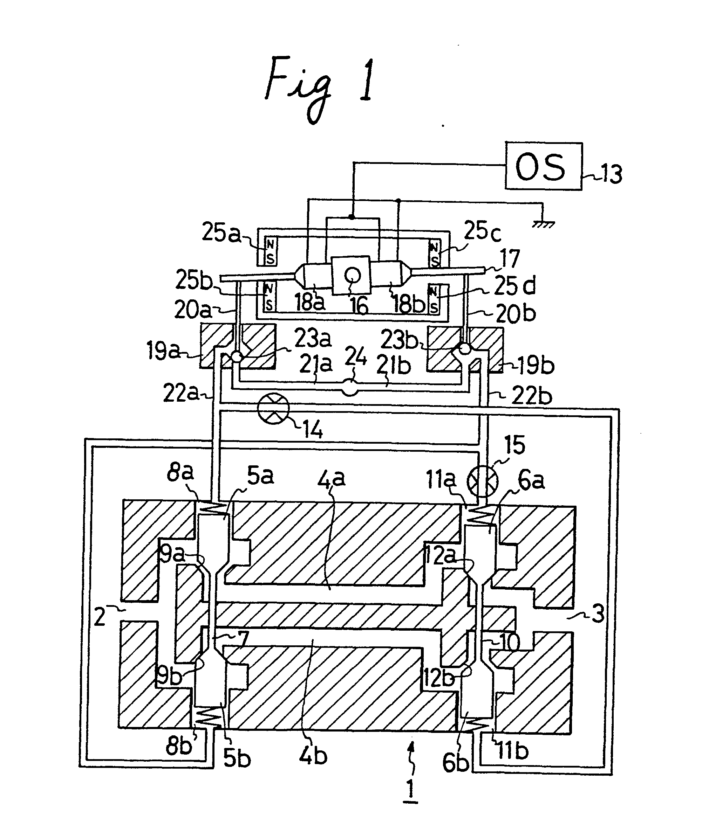

Initially, referring to Fig. 1, a structural diagram showing an ideal embodiment of the present invention is illustrated therein. A pair of fluid flow passages 4a, 4b are arranged in parallel to each other between "IN"-port 2 and "OUT"-port 3 of the valve body 1.

And, a valve seat 9a located on the way from "IN"-port 2 to the fluid passage 4a is opened or closed by a poppet 5a and, a valve seat 9b located on the way from "IN"-port 2 to the passage 4b is opened or closed by a poppet 5b. Also, a valve seat 12a located on the way from the passage 4a to "OUT"-port 3 is opened or closed by a poppet 6a and, a valve seat 12b located on the way from the passage 4b to "OUT"-port 3 is opened or closed by a poppet 6b likewise.

Thereupon, linking the poppet 5a with the same 5b by a pin 7 and also floating them inside pressure chambers 8a, 8b arranged opposite to each other by a differential pressure between said facing chambers 8a and 8b will make it possible to open the valve seat 9b by the poppet 5b when the poppet 5a acts to close the valve seat 9a and also to close the valve seat 9b by the poppet 5b when the poppet 5a acts to open the valve seat 9a. Accordingly, such events that both of the valve seats 9a and 9b are simultaneously closed or opened can be avoided.

In the same way, linking the poppet 6a with the same 6b by the pin 10 and floating them inside the pressure chambers 11a, 11b arranged opposite to each other by the differential pressure between said facing chambers 11a, 11b will make it possible to open the valve seat 12b by the poppet 6b when the poppet 6a acts to close the valve seat 12a and also to close the valve seat 12b by the poppet 6b when the poppet 6a acts to open the valve seat 12a Consequently such events that both of the valve seats 12a, 12b are simultaneously closed or opened can be avoided.

Accordingly, if a pilot pressure is applied to the pressure chambers 8b, 11a, the valve seats 9b, 12a are both closed. If further the pilot pressure is applied to the pressure chamber 8a in response to the fact that a pulse signal reflected on a certain polarity at a state where the valve seats 9a, 12b are open, the pilot pressure is applied to the pressure chamber 11b after a predetermined time lag and an operating oil will flow from "IN"-port 2 to "OUT"-port 3 through the passage 4b for a period of time until the valve seat 12b is closed after the valve seat 9b has been opened.

In the same way, if the pilot pressure is applied to the pressure chambers 8a, 11b, the valve seats 9a, 12b are both closed. If further the pilot pressure is applied to the pressure chamber 8b in response to the fact that a pulse signal reflected on another polarity at a state where the valve seats 9b, 12a are open, the pilot pressure is applied to the pressure chamber 11a after a predetermined time lag and the operating oil will flow from "IN"-port 2 to "OUT"-port 3 through the passage 4a for a period of time until the valve seat 12a is closed after the valve seat 9a has been opened.

Accordingly, the present embodiment is so contrived that a changeover between the supply of pilot pressure to the pressure chambers 8a, 11b

and the supply of pilot pressure to the pressure chambers 8b, 11a is carried out correspondigly by a polar inversion of the pulse emitted from a pulse oscillator 13 generating a variable frequency and also a time lag until the pilot pressure is supplied to the pressure chamber 11b after the pilot pressure has been supplied to the pressure chamber 8a is set by a diametral control of the orifice 14 and in addition a time lag until the pilot pressure is supplied to the pressure chamber 11a afterthe pilot pressure has been supplied to the pressure chamber 8b is set by a diametral control of the orifice 15 and thereby the flux flowing from "IN"-port 2 to "OUT"-port 3 can be controlled by the frequency of the pulse signal emitted from the pulse oscillator 13.

Therefore, the present invention will then be described as for a pressure control means and its composition for carrying out a changeover of the pilot pressure and a setting of the time lag.

Initially, referring to Fig. 1, a drive pin 17 is illustrated therein, which is, e.g., made of a ferromagnetic body with a low residual magnetism like a soft iron and supported at its central portion to be freely oscillatable on a pin 16 of the valve body 1. A pair of coils 18, 18b are wound up to said drive pin 17. Each one end of these coils 18a, 18b is OR-connected and led to the ground and another each one end of said coils is also OR-connected and led to an output of the pulse oscillator 13.

Incidentally, the coils 18a, 18b are so wound up to the driven pin 17 that, when the output of the pulse oscillator 13 is in the state of plus, the left end of said drive pin 17 is "N"-pole and the right end of the same is "S"-pole and also, when the output of the pulse oscillator 13 is minus, the left end of the drive pin 17 is "S" -pole and the right end of the same is "N"-pole.

In this connection the numeric numbers 19a, 19b in Fig. 1 denote each a pilot valve fixed to the valve body 1. Into these pilot valves 19a, 19b, up-down pins 20a, 20b are inserted to be freely ascendable and descendable and the top ends of said up-down pins 20a, 20b reach respectively the left and right end portions of said drive pin 17.

Incidentally, the pilot valve 19a is to conduct or to shut off the passage between pressure lines 21a and 22a. When the up-down pin 20a is actuated to push down a sphere 23a against the pilot pressure, the passage between pressure lines 21a and 22a will be shut off. On the contrary, when the sphere 23a is pushed up by the pilot pressure, the passage between pressure lines 21a and 22a will be open. And, the pilot pressure sent through the pilot valve 19a is supplied to the pressure chamber 8a through the pressure line 22a and then sent to the pressure chamber 11b after a time lag, determined by the diametral control of the orifice 14 has, lapsed away.

Also, the pilot valve 19b is to conduct or to shut off the passage between pressure lines 21b and 22b. When the updown pin 20b is actuated to push down the sphere 23b against the pilot pressure, the passage between pressure lines 21b and 22b will be shut off. On the contrary, when the sphere 23b is pushed up by the pilot pressure, the passage between pressure lines 21b and 22b will be open. And, the pilot pressure sent through the pilot valve 19b is supplied to the pressure chamber 8b through the pressure line 22b and then sent to the pressure chamber 11a after the time lag determined by the diametral control of the orifice 15.

In passing, the numeric number 24 shows a pilot pressure source, and four permanent magnets 25a, 25b, 25c and 25d are arranged facing their different poles respectively inward on and under both ends of the drive pin 17.

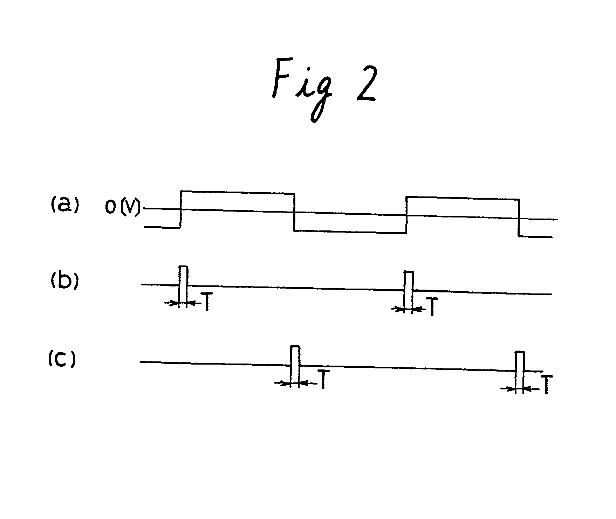

Well, the present invention will then be described as for an action of the embodiment by reference to a timing chart of Fig. 2. In Fig. 2 the type (a) shows a pattern of the pulse signal generated by the pulse oscillator 13, the type (b) shows a pattern of the time "T" which the operating oil passes through the fluid passage 4b and the type (c) shows a pattern of the time "T" which the operating oil passes through the fluid passage 4a respectively.

Now, let it be supposed that a polarity of the pulse generated by the pulse oscillator 13 is minus at its initial stage, as shown in Fig. 2 (a).

As has been noted previously, when the polarity of the pulse oscillator 13 is minus, the left end of the drive pin 17 is "S"-pole and the right end of the same is "N"-pole. Consequently, the drive pin 17 will naturally turn counterclockwise centering the pin 16 and, its left end will come to be attracted to the permanent magnet 25b and its right end to the magnet 25c.

Accordingly, in the initial stage, as shown in Fig. 1, the up-down pin 20a acts to push down the sphere 23a against the pilot pressure, so that the passage between pressure lines 21a and 22a will be shut off. Also, as the sphere 23b is pushed up by the pilot pressure, the passage between pressure lines 21b and 22b is open, the pilot pressure will be supplied to the pressure chambers 8b and 11a of the valve body 1. Therefore, in the initial stage, as shown in Fig. 1, the poppet 5a acts to open the valve seat 9a but the poppet 6a acts to close the valve seat 12a, so that the operating oil cannot flow from "IN"-port 2 to "OUT"-port 3 through the fluid passage 4a. Also, the poppet 6b acts to open the valve seat 12b but the poppet 5b acts to close the valve seat 9b, so that the operating oil cannot flow from "IN"-port 2 to "OUT"-port 3 through the fluid passage 4b.

Therefore, in this state, the fluid passage between "IN"-port 2 and "OUT"-port 3 is shut off.

In this state, when a polarity of the pulse generated by the pulse oscillator 13 is inversed and turns to plus, a polarity of the drive pin 17 is also inversed and its left end turns to "N"-pole and its right end to "S"-pole, and then said left end is attracted to the permanent magnet 25a and said right end to the same 25d respectively.

Consequently, as the up-down pin 20b acts to push down the sphere 23b against the pilot pressure, the pressure between pressure lines

21b and 22b will be shut off, and in consequence the pilot pressure cannot be supplied to both of the pressure chamber 8b and 11a. And, at the same time as the sphere 23b is pushed down by the action of the up-down pin 20b, the sphere 23a is pushed up by the pilot presssure and the passage between pressure lines 21a and 22a opens.

Thus, when the passage between pressure lines 21a and 22a is open, the pilot pressure is sent to the pressure chamber 8a and then sent to the same 11b after the time lag "T" set by the diametral control of the orifice 14 has lapsed away.

Now, when the pilot pressure is applied to the pressure chamber 8a, the valve seat 9a will be closed and at the same time the pressure chamber 8b will be opened. As the valve seat 12b is opened until the time lag "T" set by the diametral control of the orifice 14 has lapsed away, the operating oil will come to flow from "IN"-port 2 to "OUT"-port 3 through the fluid passage 4b within the range of time "T" shown in Fig. 2 (b). And, the valve seat 12b is closed by the pilot pressure applied to the pressure chamber 11b after the time "T" set by the diametral control of the orifice 14 has lapsed away, so that the operating oil flowing through the fluid passage 4b ceases its flow completely. After this, until a polarity of the pulse generated by the pulse oscillator 13 is inversed, the poppets 5a and 6b act to close the valve seats 9a and 12b and at the same time the poppets 5b and 6a continue to act to open the valve seats 9b and 12a respectively.

Next, in the state where the pilot pressure is thus applied to the pressure chambers 8a and 11b, if a polarity of the pulse generated by the pulse oscillator 13 is reinversed and turns to minus, the left end of the drive pin 17 will come to "S"-pole and the right end of the same to "N"-pole and then the left end of the drive pin 17 is attracted to the permanent magnet 25b and its right end to the same 25c respectively.

Accordingly, the up-down pin 20a acts to push down the sphere 23a against the pilot pressure, so that the passage between pressure lines 21a and 22a is shut off and in consequence the pilot pressure cannot be applied to both of the pressure chambers 8a and 11b. And, at the same time as the sphere 23a is pushed down by the action of the up-down pin 20a, the sphere 23b is pushed up by the pilot pressure and the passage between pressure lines 21b and 22b opens.

And, when the passage between pressure lines 21b and 22b is open, the pilot pressure will be applied to the pressure chamber 8b and then sent to the same 11a after the time lag "T" set by the diametral control of the orifice 15 has lapsed away.

When the pilot pressure is applied to the pressure chamber 8b, the valve seat 9b will be shut off, and at the same time the valve seat 9a will be opened. And, as the valve seat 12a continues to be opened until the time "T" set by the diametral control of the orifice 15 lapses away, the operating oil flows from "IN"-port 2 to "OUT"-port 3 through the fluid passage 4a within the range of the time "T" shown in Fig. 2 (c).

And, when the time "T" set by the diametral control of the orifice 15 has lapsed away, the pilot pressure will be applied to the pressure chamber 11a and the valve seat 12a will thereby be closed and in consequence the flow of the operating oil through the fluid passage 4a ceases completely. And, until a polarity of the pulse generated by the pulse oscillator 13 is then inversed, the poppets 5b and 6a act to close the valve seats 9b and 12a respectively and also the poppets 5a and 6b continue their operation to open the valve seats 9a and 12b.

In this way, the present embodiment is so contrived that, when a polarity of the pulse generated by the pulse oscillator 13 is inversed from minus to plus, the operating oil flows through the fluid passage 4b until a very short time "T" set by the diametral control of the orifice 14 has lapsed away as shown in Fig. 2 (b) and also when a polarity of the pulse generated by the pulse oscillator 13 is inversed from plus to minus, the operating oil flows through the fluid passage 4a until a very short time "T" set by the diametral control of the orifice 15 has lapsed away. Namely, the operating oil flows only for a period of the time "T" whenever a polarity of the pulse is inversed.

And, a flux per pulse of the operating oil flowing from "IN"-port 2 to "OUT"-port 3 is determined in proportion to a length of the very short time "T" which the fluid passage 4a or 4b is opened, and said very short time "T" is set by the diametral control of the orifices 14 and 15. Accordingly, if the aforesaid time lag "T" is preset by controlling a diameter of the orifices 14 and 15, the flux per one pulse of the operating oil flowing from "IN"-port 2 to "OUT"-port 3 can be determined uniformly.

And, as a flux per unit time (e.g., 1 second) of the operating oil flowing from "IN"-port 2 to "OUT"-port 3 is given by a value which is obtained ba multiplying the flux per pulse of the operating oil by the number of pulses per unit time (e.g., 1 second), if a frequency of the pulse generated by the pulse oscillator 13 is controlled by a time constant of said oscillator 13, the flux per unit time (e.g., 1 second) can be controlled exactly.

In the aforementioned embodiment, such an example that the fluid passages 4a, 4b are arranged in parallel to each other and the operating oil is displaced in both cases where a polarity of the pulse is inversed from plus to minus and vice versa is shown. However, the flux control can be accomplished by controlling the pulse frequency even if either of the fluid passages 4a and 4b is omitted. In this case, the operating oil flows in accordance with the timing in either of the cases where a polarity of the pulse is inversed from plus to minus and vice versa.

Also, in the aforementioned, the up-down pins 20a and 20b are raised or lowered through the oscillation centering the pin 16 and a changeover of the pilot pressure is performed as shown therein. However, there is no objection even in lifting up or down the pins 20a and 20b with the use of, e.g., individually independent solenoids.

Moreover, in the abovenoted embodiment, the time lag " T" between the moment when the pilot pressure is applied to the pressure chamber 8a or 8b and the moment when the pilot pressure is applied to the pressure chamber 11b or 11a is set by the diametral control of the orifices 14 and 15. However any method is available, provided that the time lag "T" between the moment when the pilot pressure is applied to the pressure chamber 8a or 8b and the moment when it is applied to the pressure chamber 11b or 11a can be set exactly. For instance, it is also allowable to electrically set the time lag in an electric circuit by controlling a charge time of a condenser or the like.

Furthermore, in the foregoing embodiment, the pilot pressure obtained from a single pilot pressure source through the changeover between pilot valves 19a and 19b is supplied to either of the pressure chambers 8a, 11b or the same 8b, 11a. However, it is also justifiable that an independant pilot pressure source is provided for each of the pilot valves 19a, 19b or for each of the pressure chambers 8a, 8b and 11a 11b. The time lag " T" might be set by a delay circuit of the "CR" type or the like.

Yet further, it will easily be understood from the foregoing embodiment that an ideal control characteristic can be obtained by adjusting not only a frequency of the pulse oscillator but also an output voltage of the same or by carrying out a diametral adjustment of the orifice.

As has been understood from the above, according to the present invention, an accurate flow control can be attained by controlling the pulse frequency. And, as a leakage of the operating oil can completely be prevented through the engagemant of poppet and valve seat, the flux per pulse can exactly be controlled. Thus, the present invention makes it needless to use a highly mechanized control technique like a flux feedback and so on; besides it is possible to simplify its control mechanism to the full extent.

Moreover, as it is possible to arrest a so-called reaction force exactly through the engagement of poppet and valve seat, the present flow control valve can display its function most satisfactorily as a drive means for an equipment having a large reaction force.

## Claims

1. Flow control valve, including
a valve body (1) having an inlet port (2) and an outlet port (3),
at least one fluid flow passage (4a, 4b) extending between and communicating at each end with the said inlet and outlet ports (2, 3),
valve means for opening and closing said flow passage (4a, 4b) being hydraulically operable

fluid pressure control means (19a, 19b) operatively being associated with said valve means,
pulse signal means (13) producing a pulse signal of variable frequency operatively being associated with said pressure control means (19a, 19b) for controlling the flow within said flow passage (4a, 4b) characterised by
a first valve seat (9a, 9b) adjacent the end of said flow passage (4a, 4b) near said inlet port (2),
a second valve seat (12a, 12b) adjacent the end of said flow passage (4a, 4b) near said outlet port (3),
a first poppet (5a, 5b) slidably mounted in a first pressure chamber (8a, 8b) for engagement and disengagement with said first valve seat (9a,9b),
a second poppet (6a, 6b) slidably mounted in a second pressure chamber (11a, 11b) for engagement and disengagement with said second valve seat (12a, 12b),
the pressure control means (19a, 19b) being operatively associated with said first pressure chamber (8a, 8b) to control the pressure applied thereto in accordance with a timing synchronised by said pulse signal and to said second pressure chamber (11a, 11b) after a predetermined delay for opening and closing said flow passage (4a, 4b) to allow intermittend flow therethrough for predetermined time periods controlled by said pulse signal means (13).

2. Flow control means according to claim 1, characterised by
two parallel fluid flow passages (4a, 4b) each extending between and communicating at each end with said inlet and outlet ports (2, 3),
a first pair of valve seats (9a, 9b) adjacent the ends of said flow passages (4a, 4b) near said inlet port (2),
a second pair of valve seats (12a, 12b) adjacent the ends of said flow passages (4a, 4b) near said outlet port (3),
a first pair of poppets (5a, 5b) slidably mounted in first pressure chambers (8a, 8b) for engagement and disengagement with said first pair of valve seats (9a, 9b) respectively,
a second pair of poppets (6a, 6b) slidably mounted in second pressure chambers (11a, 11b) for engagement and disengagement with said second pair of valve seats (12a, 12b) respectively,
each of said first and second pairs of poppets (5a, 5b; 6a, 6b) being simultaneously movable, so that movement of one of said first and second pairs of poppets into closing engagement with the respective valve seat moves the other of said first and second pairs of poppets into a disengaged position with the respective valve seat,
the pressure control means (19a, 19b) being operatively associated with said first pressure chambers (8a, 8b) selectively to control the pressure applied thereto in accordance with a timing synchronised by said pulse signal and to said second pressure chambers (11a, 11b) selectively after a predetermined delay for opening and closing said flow passages (4a, 4b) to allow intermittend flow therethrough for predetermined time periods controlled by said pulse signal means (13).

## Patentansprüche

1. Steuerventil, mit

einem eine Eingangsöffnung (2) und eine Ausgangsöffnung (3) aufweisenden Ventilgehäus (1),

wenigstens einer, sich zwischen den Eingangs- und Ausgangsöffnungen (2, 3) erstreckenden und beidseitig mit diesen in Verbindung stehenden Fluidleitung (4a 4b),

hydraulisch betätigbaren Ventilteilen zum Öffnen und Schließen der genannten Fluidleitung (4a, 4b)

Druckregelorganen (19a, 19b), die mit den Ventilteilen in Wirkverbindung stehen,

Mitteln (13) zur Erzeugung von Impulsen variierbarer Frequenz, die zur Steuerung der Strömung in der genannten Fluidleitung (4a, 4b) mit den genannten Druckregelorganen (19a, 19b) in Wirkverbindung stehen, gekennzeichnet durch

einen ersten, in der Nähe des, der Eingangsöffnung (2) zugekehrten Endes der Fluidleitung (4a, 4b) angeordneten Ventilsitz (9a, 9b),

einen zweiten, in der Nähe des, der Ausgangsöffnung (3) zugekehrten Endes der Fluidleitung (4a, 4b) angeordneten Ventilsitzes (12a, 12b),

einen ersten, in einer ersten Druckkammer (8a, 8b) mit Hinblick auf ein Anliegen an sowie ein Entfernen von dem genannten ersten Ventilsitz (9a, 9b) gleitfähig angeordneten Ventilkegel (5a, 5b) und einen zweiten, in einer zweiten Druckkammer (11a, 11b) mit Hinblick auf ein Anliegen an sowie ein Entfernen von dem genannten zweiten Ventilsitz (12a, 12b) gleitfähig angeordneten Ventilkegel (6a, 6b),

wobei die Druckregelorgane (19a, 19b) mit der ersten Druckkammer (8a, 8b) zur Steuerung des in dieser wirksamen Druckes nach Maßgabe einer, durch die genannten Impulse synchronisierten Einstellung sowie nach Ablauf einer vorherbestimmten Verzögerung zum Öffnen und Schließen der genannten Fluidleitung (4a, 4b) des in der zweiten Druckkammer (11a, 11b) wirksamen Druckes in Wirkverbindung stehen, so daß sich während vorherbestimmter Zeitintervalle ein intermittierender, durch die genannten Mittel (13) zur Erzeugung von Impulsen geregelter Durchfluß durch die Fluidleitung (4a, 4b) ergibt.

2. Steuerventil nach Anspruch 1, gekennzeichnet durch

zwei parallele Fluidleitungen (4a, 4b), die sich zwischen den Eingangs- und Ausgangsöffnungen (2, 3) erstrecken und jeweils beidseitig mit diesen in Verbindung stehen,

ein erstes Paar von in der Nähe der, der Eingangsöffnung (2) zugekehrten Enden der genannten Fluidleitungen (4a, 4b) angeordneten Ventilsitzen (9a, 9b),

ein zweites Paar von in der Nähe der, der Ausgangsöffnung (3) zugekehrten Enden der Fluidleitungen (4a, 4b) angeordneten Ventilsitzen (12a, 12b),

ein erstes Paar von in ersten Druckkammern (8a, 8b) mit Hinblick auf ein Anliegen an sowie ein Entfernen von dem genannten ersten Paar von Ventilsitzen gleitfähig angeordneten von Ventilkegeln (5a, 5b),

ein zweites Paar von in zweiten Druckkammern (11a, 11b) mit Hinblick auf ein Anliegen an sowie ein Entfernen von dem genannten zweiten Paar von Ventilsitzen (12a, 12b) gleitfähig angeordneten Ventilkelgeln (6a, 6b),

wobei jedes der genannten ersten und zweiten Paare von Ventilkegeln (5a, 5b; 6a, 6b) gleichzeitig bewegbar ist, so daß eine Bewegung des einen Ventilkegels der genannten ersten und zweiten Paare von Ventilkegeln in eine Schließstellung hinsichtlich des jeweiligen Ventilsitzes eine Bewegung des jeweils anderen Ventilkegels der genannten ersten und zweiten Paare von Ventilkegeln in die Öffnungsstellung hinsichtlich des jeweiligen Ventilsitzes nach sich zieht und

wobei die Druckregelorgane (19a, 19b) mit den ersten Druckkammern (8a, 8b) zur Steuerung des in diesen wirksamen Druckes nach Maßgabe einer, durch die genannten Impulse synchronisierten Einstellung sowie nach Ablauf einer vorherbestimmten Verzögerung zum Öffnen und Schließen der genannten Fluidleitungen (4a, 4b) des in den zweiten Druckkammern (11a, 11b) wirksamen Druckes in Wirkverbindung stehen, so daß sich während vorherbestimmter Zeitintervalle ein intermittierendar, durch die genannten Mittel zur Erzeugung von Impulsen geregelter Durchfluß durch die Fluidleitungen (4a, 4b) ergibt.

## Revendications

1. Valve de régulation comprenant:

un corps de valve (1) avec un orifice d'entrée (2) et un orifice de sortie (3),

au moins un passage d'écoulement de fluide (4a, 4b) s'étendant entre lesdits orifices d'entrée et de sortie (2, 3) et communiquant à chaque extrémité avec ceux-ci,

un moyen de valve actionné hydrauliquement pour ouvrir et fermer ledit passage d'écoulement de fluide (4a, 4b),

un moyen de commande de la pression de fluide (19a, 19b) associé opérativement audit moyen de valve,

un moyen à signal d'impulsion (13), fournissant un signal d'impulsion de fréquence variable, associé opérativement audit moyen de commande de pression (19a, 19b) pour commander l'écoulement à l'intérieur dudit passage d'écoulement (4a, 4b), caractérisée par:

un premier siège de valve (9a, 9b) voisin de l'extrémité du dit passage d'écoulement (4a, 4b) proche dudit orifice d'entrée (2),

un second siège de valve (12a, 12b) voisin de l'extrémité dudit passage d'écoulement (4a, 4b) proche dudit orifice de sortie (3),

un premier clapet (5a, 5b) monté pour coulisser dans une première chambre de pression (8a, 8b) pour engager le dit premier siège de valve (9a, 9b) et s'écarter de celui-ci,

un second clapet (6a, 6b) monté pour coulisser dans une seconde chambre de pression (11a, 11b) pour engager ledit second siège de valve (12a, 12b) et s'écarter de celui-ci,

le moyen de commande de pression (19a, 19b) étant associé opérativement à ladite première chambre de pression (8a, 8b), pour commander la pression appliquée à celle-ci selon un minutage synchronisé par ledit signal dimpulsion, et à ladite seconde chambre de pression (11a, 11b) pour ouvrir et fermer ledit passage d'écoulement (4a, 4b) avec un retard prédéterminé afin de permettre un écoulement intermittent à travers ce passage pendant des laps de temps prédéterminés commandés par ledit moyen d'impulsion de signal (13).

2. Valve de régulation selon la revendication 1 caractérisée par:

deux passages parallèles d'écoulement de fluide (4a, 4b) s'étendant chacun entre lesdits orifices d'entrée et de sortie (2, 3) et communiquant avec ceux-ci à chaque extrémité,

une première paire de sièges de valve (9a, 9b) voisins des extrémités desdits passages d'écoulement (4a, 4b) proches dudit orifice d'entrée (2),

une seconde paire de sièges de valve (12a, 12b) voisins des extrémités desdits passages d'écoulement (4a, 4b) proches dudit orifice de sortie (3),

une première paire de clapets (5a, 5b) montés pour coulisser dans des premières chambres de pression (8a, 8b) pour engager respectivement ladite première paire de sièges de valve (9a, 9b) et s'en écarter,

une seconde paire de clapets (6a, 6b) montés pour coulisser dans des secondes chambres de pression (11a, 11b) pour engager respectivement ladite seconde paire de sièges de valve (12a, 12b) et s'en écarter,

chacune desdites première et seconde paires de clapets (5a, 5b; 6a, 6b) pouvant se déplacer simultanément, de sorte que le déplacement de l'une desdites première et seconde paires de clapets pour venir en contact de fermeture avec le siège de valve correspondant déplace l'autre desdites première et seconde paires de clapets jusqu'à une position dégageant le siège de valve qui lui correspond,

le moyen de commande de pression (19a, 19b) étant associé opérativement auxdites premières chambres de pression (8a, 8b), pour commander sélectivement la pression qui leur est appliquée selon un minutage synchronisé par ledit signal d'impulsion, et auxdites secondes chambres de pression (11a, 11b) pour ouvrir et fermer sélectivement, avec un retard prédéterminé, lesdits passages d'écoulement (4a, 4b) pour permettre un écoulement intermittent à travers ceux-ci pendant des laps de temps prédéterminés commandés par ledit moyen de signal d'impulsion (13).

# Fig 1

Fig 2

(a) 0 (V)

(b)

(c)